# EUROPÄISCHE PATENTANMELDUNG

(11) **EP 4 170 235 A1**
(43) Veröffentlichungstag der Anmeldung: **26.04.2023**
(21) Anmeldenummer: 22196806.8
(22) Anmeldetag: 21.09.2022
(51) Int. Cl.: F23N 1/00, F23N 5/24

(54) **VERFAHREN ZUR AUSWERTUNG EINER VON EINEM SENSOR ERFASSBAREN INSTATIONÄREN DRUCKDIFFERENZ AN EINER GASTHERME SOWIE ZUGEHÖRIGE GASTHERME**

(30) Priorität: 20.10.2021 DE 102021127224
(71) Anmelder: ebm-papst Landshut GmbH, 84030 Landshut (DE)
(72) Erfinder: VROLIJK, Enno, 7751DX Dalen (NL); Hermann, Jens, 84034 Landshut (DE); WEINGART, Markus, 84056 Rottenburg (DE); Kerschreiter, Andreas, 84174 Eching (DE); Simon, Bernhard, 93059 Regensburg (DE)
(74) Vertreter: Staeger & Sperling Partnerschaftsgesellschaft mbB

(57) **Zusammenfassung**

Die Erfindung betrifft ein Verfahren zur Auswertung einer von einem Sensor erfassbaren instationären Druckdifferenz an einer Gastherme, wobei der Sensor einen Differenzdruck zwischen einem Druck (p2) an einem Messpunkt stromauf der Hauptmengendrossel (3) und stromab des Regelventils (2) und einem Referenzdruck (p0, p1) an einem Referenzmesspunkt erfasst und an eine Auswerteelektronik übermittelt, wobei eine Heizleistung der Gastherme gemäß einem vorbestimmten Heizleistungsverlauf variiert und/oder auf einen vorbestimmten Wert eingestellt wird, wobei der Sensor während der Variation der Heizleistung und/oder bei der auf den vorbestimmten Wert eingestellten Heizleistung einen Differenzdruckverlauf erfasst und an die Auswerteelektronik übermittelt, wobei die Auswerteelektronik den Differenzdruckverlauf über seinen Zeitbereich und/oder seinen Frequenzbereich auswertet und zumindest ein den Differenzdruckverlauf charakterisierender Kennwert ermittelt und mit einem vorbestimmten Vergleichswert verglichen wird, wobei bei einer über einen vorbestimmten Toleranzwert hinausgehenden Abweichung des Kennwerts von dem Vergleichswert ein Fehler der Gastherme erkannt wird.

## Beschreibung

### Beschreibung:

Die Erfindung betrifft ein Verfahren zur Auswertung einer von einem Sensor erfassbaren instationären Druckdifferenz an einer Gastherme sowie eine Gastherme, welche ausgebildet ist, das Verfahren durchzuführen.

Im Stand der Technik sind Gasthermen bekannt, bei welchen eine Druckdifferenz stromauf einer Hauptmengendrossel zu einem Referenzdruck durch einen als Differenzdrucksensor ausgebildeten Sensor gemessen und der Brennstoffmassenstrom basierend auf der Druckdifferenz geregelt wird.

Grundsätzlich umfasst eine Gastherme neben weiteren Komponenten meist eine Mischeinrichtung zum Mischen eines von einem Brennstoffeinlass zuströmenden Brennstoffs und einer von einem Lufteinlass zuströmenden Luft zu einem Brennstoff-Luft-Gemisch, ein Gebläse zum Ansaugen des Brennstoffs und der Luft durch die Mischeinrichtung, eine Hauptmengendrossel zur Begrenzung eines Massenstroms des Brennstoffs in die Mischeinrichtung, ein stromauf der Hauptmengendrossel angeordnetes Regelventil zur Regelung eines Massenstroms des Brennstoffs in die Mischeinrichtung sowie ein stromauf des Regelventils angeordnetes Sicherheitsventil zur Unterbrechung des Massenstroms des Brennstoffs. Das Gas-Luft-Gemisch kann dann anschließend einem Brenner zugeführt werden, in welchem das Gemisch verbrannt werden kann.

Zur Regelung des Drucks des einströmenden Brennstoffs arbeiten die Regelventile im Stand der Technik oftmals als mechanisch-pneumatische Gasventil, in welchem eine Druckdifferenz durch eine Regelmembran erfasst wird und welches zwischen zwei Bereichen unterschiedlichen Drucks angeordnet ist.

Alternativ kommen im Rahmen einer sogenannten "elektronischen Regelung" jedoch auch Drucksensoren zum Einsatz, bei welchen die Drücke durch getrennte Sensoren erfasst und die Druckwerte zur Ermittlung der Druckdifferenz elektronisch ausgewertet werden. Abhängig von der Auswertung wird ein elektronisch ansteuerbares Regelventil bzw. Gasventil gesteuert bzw. geregelt.

In einer Einrichtung zur Regelung des Gas-Luft-Gemisches einer Gastherme wird beispielsweise der Druck stromauf der Hauptmengendrossel mit einem Differenzdrucksensor, welcher den Differenzdruck bzw. die Druckdifferenz zwischen zwei Druckabnahmen misst, gegenüber einem Referenzdruck gemessen.

Hierbei wird ein elektronisches Gasventil meist durch einen digitalen Regler angesteuert, welcher beispielsweise auf einem Mikrocontroller oder einem anderen Steuergerät implementiert ist, und durch welchen der ermittelte Offsetdruck bzw. die Druckdifferenz auf den gewünschten bzw. vorgegebenen Sollwert geregelt werden soll.

Da der Sollwert des Drucks bzw. der Druckdifferenz meist 0 Pa beträgt, wird oftmals von einer "elektronischen Nulldruckregelung" gesprochen.

Unabhängig davon, ob es sich um eine elektronische oder mechanisch pneumatische Regelung handelt, beschränkt sich die Funktion jeweils auf die Regelung der Gastherme basierend auf der Druckdifferenz ohne zusätzliche Funktionalitäten bereitstellten zu können.

Es wäre jedoch wünschenswert eine Gastherme bezüglich weiterer Kennwerte überwachen zu können, um Fehler der Gastherme abhängig von den Kennwerten erkennen und die Therme davon abhängig steuern bzw. regeln sowie weitere insbesondere die Lebensdauer der Therme verlängernde Maßnahmen ergreifen zu können.

Soweit in den bekannten Gasthermen überhaupt zusätzliche Kennwerte erfasst oder Fehler erkannt werden können, sind hierfür zusätzliche Sensoren und Auswertevorrichtungen notwendig, was aufwändig und teuer ist.

Der Erfindung liegt deshalb die Aufgabe zugrunde, die vorgenannten Nachteile zu überwinden und ein Verfahren bereitzustellen, durch welche Fehler einer Gastherme in einfacher und kostengünstiger Weise erfasst und ausgewertet werden können.

Diese Aufgabe wird durch die Merkmalskombination gemäß Patentanspruch 1 gelöst.

Erfindungsgemäß wird daher ein Verfahren zur Auswertung einer von einem Sensor erfassbaren instationären Druckdifferenz an einer Gastherme vorgeschlagen. Der Sensor ist hierbei ein Differenzdrucksensor oder ein Massenstromsensor. Ein Differenzdrucksensor kann insbesondere die Druckdifferenz zwischen zwei Drücken bzw. zwischen den Drücken zweier Fluide in zwei voneinander getrennten Bereichen bestimmten, wobei der Differenzdrucksensor hierfür auch zwei einzelne Sensoren oder Druckaufnehmer umfassen kann. Die Gastherme weist eine Mischeinrichtung zum Mischen eines von einem Brennstoffeinlass zuströmenden Brennstoffs und einer von einem Lufteinlass zuströmenden Luft zu einem Brennstoff-Luft-Gemisch, ein Gebläse zum Ansaugen des Brennstoffs und der Luft durch die Mischeinrichtung, eine Hauptmengendrossel zur Begrenzung eines Massenstroms des Brennstoffs in die Mischeinrichtung, ein stromauf der Hauptmengendrossel angeordnetes Regelventil zur Regelung eines Massenstroms des Brennstoffs in die Mischeinrichtung sowie ein stromauf des Regelventils angeordnetes Sicherheitsventil zur Unterbrechung des Massenstroms des Brennstoffs auf. Das Regelventil kann auch als Gasregelventil bezeichnet werden und wird vorzugsweise von einem Offset-Regler angesteuert, welcher durch Ansteuerung des Regelventils den gewünschten Offsetdruck bzw. den gewünschten Sollwert einregelt. Weiter kann die Gastherme einen Brenner und eine Brennkammer aufweisen, zu welchen das Brennstoff-Luft-Gemisch zur Verbrennung geleitet werden kann. Der Sensor erfasst erfindungsgemäß einen Differenzdruck zwischen einem Druck an einem Messpunkt stromauf der Hauptmengendrossel und stromab des Regelventils und einem Referenzdruck (beispielsweise Umgebungsdruck oder Druck der einströmenden Luft) an einem Referenzmesspunkt, welcher in der Umgebung oder in einer luftführenden und zu der Mischeinrichtung führenden Leitung angeordnet sein kann. Weiter übermittelt der Sensor zumindest den Differenzdruck und optional auch den Druck an dem Messpunkt und den Referenzdruck an eine Auswerteelektronik, welche vorzugsweise integral mit einer Regelelektronik zur Regelung des Regelventils ausgebildet ist und welche beispielsweise mittels eines Mikrocontrollers implementiert sein kann. Verfahrensgemäß wird eine Heizleistung der Gastherme gemäß einem vorbestimmten Heizleistungsverlauf variiert und/oder auf einen vorbestimmten Wert eingestellt. Dabei erfasst der Sensor während der Variation der Heizleistung und/oder bei der auf den vorbestimmten Wert eingestellten Heizleistung einen Differenzdruckverlauf und übermittelt diesen an die Auswerteelektronik. Die Auswerteelektronik wertet den Differenzdruckverlauf über seinen Zeitbereich und/oder seinen Frequenzbereich aus und ermittelt zumindest ein den Differenzdruckverlauf charakterisierender Kennwert und vergleicht diesen mit einem vorbestimmten Vergleichswert, wobei bei einer über einen vorbestimmten Toleranzwert hinausgehenden Abweichung des Kennwerts von dem Vergleichswert ein Fehler der Gastherme erkannt wird.

Der erfindungsgemäße Gedanke lässt sich dahingehend zusammenfassen, dass an Gasthermen mit einer elektronischen Nulldruckregelung durch die weitere Auswertung des Differenzdruckverlaufs zusätzliche Funktionalitäten bereitgestellt werden sollen, was beispielsweise bei Gasthermen mit mechanisch-pneumatischen Regelventilen, welche den Offsetdruck mit entsprechenden Regelmembranen einregeln, nicht in einfacher Weise möglich ist.

Entsprechend können bei solchen Gasthermen mit einem Differenzdrucksensor, welcher für gewöhnlich für die elektronische Nulldruckregelung verwendet wird, und einer Auswertelektronik durch Auswertung des Differenzdruckverlaufs und insbesondere der darin enthaltenen instationären Drucksignale weitere Prozessgrößen ermittelt, Zustände der Gastherme erfasst und/oder plausibilisiert und dadurch Fehler der Gastherme bzw. an der Gastherme erkannt werden.

In Gasthermen kann es zu einer Thermoakustik kommen, wenn schwingfähige Teile der Therme (Resonatoren) bzw. schwingfähige Teile in dem durch die Gastherme gebildeten System in Resonanz grenzstabil schwingen. Zu dem System gehören beispielsweise der Brenner, die Brennkammer, die Flamme in der Brennkammer zur Verbrennung des Gas-Luft-Gemisches, die Mischeinrichtung und das Gasregelventil.

Magere Gemische aus Luft und Brennstoff führen bei vorgemischten Flammen oft zu niederfrequenten Druckfluktuationen am Brenner, welche dann Resonatoren zum Schwingen anregen können. Zu den Resonatoren gehören z.B. eine Gas-Säule in der Brennkammer, aber auch Feder-Masse-Systeme im Gasregelventil.

Auch falls in der Heiztherme z.B. durch einen Windstoß die Flamme kurzzeitig unzulässig mager wird, kann Thermoakustik auftreten. Meist macht sich die Thermoakustik durch ein lautes Brummen bemerkbar, da die Schwingungen oft niederfrequent (10 bis 100Hz) sind.

Eine vorteilhafte Weiterbildung des erfindungsgemäßen Verfahrens sieht vor, dass die Gastherme ferner einen Brenner aufweist, der ausgebildet ist, das Brennstoff-Luft-Gemisch zu verbrennen, sodass es durch die Verbrennung zu einer Thermoakustik in dem Brennstoff-Luft-Gemisch kommen kann, welche während der Verbrennung durch den Sensor als Druckfluktuationen erfassbar ist. Die Auswerteelektronik erfasst die Druckfluktuation und erkennt durch Analyse des Differenzdruckverlaufs die auftretende Thermoakustik als einen (ggfs. ersten) Kennwert.

Weiter ist hierbei vorzugsweise vorgesehen, dass die Auswertelektronik die als ein Kennwert erkannte bzw. bestimmte Thermoakustik mit einem vorbestimmten Grenzwert für die Thermoakustik als Vergleichswert vergleicht und bei einem Überschreiten des Grenzwerts, was mit einem Fehler der Gastherme gleichzusetzen ist, den Brenner und/oder das Gebläse und/oder das Regelventil und/oder ein Sicherheitsventil die Thermoakustik absenkend und insbesondere unterhalb des Grenzwerts absenkend ansteuert.

Bei einer tatsächlich auftretenden Thermoakustik kann also eine dadurch ausgelöste Druckfluktuation, welche eine hohe Amplitude von mehreren hundert Pa aufweisen kann, detektiert und mittels eines dafür ausgebildeten Algorithmus als Thermoakustik erkannt werden.

Wurde eine Thermoakustik erkannt, können verschiedene Aktionen durchgeführt werden:
1) Anfetten des Brennstoff-Luft-Gemisches: Ein Durchfluss des Brennstoffs durch das Regelventils wird mit einer vorgegebenen Geschwindigkeit erhöht, bis die thermoakustischen Schwingungen bzw. die Thermoakustik nicht mehr detektiert werden. Die Geschwindigkeit kann in Abhängigkeit einer GV-Kennlinie des Regelventils und der Drehzahl des Gebläses festgelegt werden. Im Anschluss wird das Regelventil wieder durch eine dafür vorgesehene Steuervorrichtung bzw. einen so genannten Offsetdruck-Regler angesteuert.
2) Modulation der Heizleistung bzw. einer Drehzahl des Gebläses: Die Drehzahl wird bei aktivem Offsetdruck-Regler erhöht, um einen anderen/stabileren Betriebspunkt anzufahren.
3) Spülen und weitere Zündversuche: Falls ein Abgasweg abgeschoben wurde und dabei die Thermoakustik auftritt, kann beim erneuten Start der Gastherme dieser abgeschobene Zustand erkannt werden.
4) Verriegelung: Werden die unter 1) und 2) genannten Verfahren zu oft in einem vorbestimmten Zeitraum durchgeführt, kann die Therme verriegelt d.h. beispielsweise das Sicherheitsventil geschlossen werden. Eine auftretende Thermoakustik kann auch ein Indiz für eine ungeeignete Kombination aus Gasart und Hauptmengendrossel sein, die so erkannt werden kann.

Weiter kann gemäß einer Variante des Verfahrens vorgesehen sein, dass das Gebläse ein Laufrad aufweist und das Laufrad durch seine Rotation Druckfluktuationen des Brennstoff-Luft-Gemisches erzeugt bzw. erzeugen kann, welche von dem Sensor erfassbar sind. Verfahrensgemäß werden von der Auswerteelektronik die Druckfluktuationen durch die Frequenzen des Differenzdruckverlaufs erfasst. Aus den Frequenzen des Differenzdruckverlaufs werden dann eine Ist-Drehzahl des Laufrades als ein Kennwert bzw. als ein weiterer oder zweiter Kennwert bestimmt.

Hierbei ist gemäß einer vorteilhaften Weiterbildung vorgesehen, dass das Gebläse einen das Laufrad mit einer Motordrehzahl antreibenden Motor aufweist und die Motordrehzahl einer Soll-Drehzahl des Laufrades entspricht. Die Auswerteelektronik vergleicht verfahrensgemäß die als Kennwert bestimmte Ist-Drehzahl des Laufrades mit der Soll-Drehzahl des Laufrades als Vergleichswert. Bei einer Abweichung der Ist-Drehzahl von der Soll-Drehzahl des Laufrades über einen vorbestimmten Toleranzwert hinaus wird durch die Auswerteelektronik erkannt, dass das Laufrad nicht in vorbestimmter Weise mit dem Motor verbunden ist. Konkret kann sich eine Verbindung zwischen Laufrad und Motor gelöst haben, so dass das Laufrad also bezüglich seiner Drehzahl von der Motordrehzahl abweicht, was wie beschrieben über die Druckfluktuation erkannt werden kann.

Wurde erkannt, dass das Laufrad nicht (mehr) in vorbestimmter Weise mit dem Motor verbunden ist, entspricht das einem Fehler, worauf beispielsweise eine Fehlermeldung ausgegeben und/oder die Gastherme entsprechend angesteuert werden kann. Beispielsweise könnten das Sicherheits- und/oder Regelventil wiederum in eine den Durchfluss sperrende Stellung gebracht werden.

Insbesondere bei einer geeigneten Kombination aus Gebläse und einer als Venturi-Mischer ausgebildeten Mischeinrichtung sind die drehzahlabhängigen Druckfluktuationen durch die 1. Ordnung oder Schaufelordnung des Laufrades am Sensor messbar. So kann z.B. während einer Spülphase der Gastherme plausibilisiert werden, ob das Laufrad noch fest mit dem Motor bzw. einer Nabe des Motors verbunden ist.

Als Spülphase wird dabei eine Phase beim Betrieb der Gastherme verstanden, in welcher ausschließlich Luft durch die Mischeinrichtung und insbesondere in den Brenner strömt, so dass noch eventuell vorhandener Brennstoff aus dem Brenner gespült wird. Damit kein Brennstoff beim Spülen der Gastherme nachströmen kann, ist vorzugsweise das Sicherheitsventil geschlossen bzw. in einer den Durchfluss sperrenden Stellung.

Alternativ oder zusätzlich dazu sieht eine ebenfalls vorteilhafte Weiterbildung des Verfahrens vor, dass der Differenzdruckverlauf bei geschlossenem Sicherheitsventil und insbesondere beim Spülen der Gastherme erfasst wird, sodass es in der Mischeinrichtung zu Strömungsablösungen der von dem Lufteinlass einströmenden Luft kommt, welche zu von dem Drucksensor erfassbaren Druckfluktuationen führen. Hierzu kann das Sicherheitsventil entsprechend in eine den Durchfluss sperrende Stellung gebracht und/oder angesteuert werden, wobei hierdurch zugleich keine Verbrennung in der Gastherme möglich ist. Entsprechend kann ein solcher Verfahrensablauf vorzugsweise vor einem Start oder nach einer Beendigung der Verbrennung durchgeführt werden. Verfahrensgemäß ist hierbei vorgesehen, dass die Auswerteelektronik den Differenzdruckverlauf erfasst und aus den Frequenzen des Differenzdruckverlaufs einen Ist-Volumenstrom der Luft durch die Mischeinrichtung als einen Kennwert bestimmt.

Weiter kann hierbei vorgesehen sein, dass die Auswerteelektronik aus dem von dem Sensor ermittelten Differenzdruck einen Soll-Volumenstrom bestimmt. Aus dem von dem Volumenstrom erzeugten Unterdruck, welcher durch den Sensor erfassbar ist, kann beispielsweise durch eine entsprechende Berechnung der durch die Mischeinrichtung strömende Volumenstrom der Luft als Soll-Volumenstrom bestimmt werden.

Wurde der Soll-Volumenstrom bestimmt bzw. aus dem Differenzdruckverlauf berechnet, kann ferner vorgesehen sein, dass die Auswerteelektronik den Ist-Volumenstrom und den Soll-Volumenstrom miteinander vergleicht und bei einer über einen vorbestimmten Toleranzwert hinausgehenden Abweichung einen Fehler erkennt.

Die Frequenz der Druckfluktuationen, welche durch eine Strömungsablösung an der Venturi-Düse der vorzugsweise als Venturi-Mischer ausgebildeten Mischeinrichtung erzeugt werden, sind direkt von dem Luftvolumenstrom abhängig, sodass von den Druckfluktuationen bzw. deren Frequenz auf den Luftvolumenstrom geschlossen werden kann. Die Ablösefrequenz kann entsprechend insbesondere während der Spülphase der Gastherme gemessen und damit ein Mittelwert des gemessenen Drucks plausibilisiert werden, bei welchen es sich entsprechend vorzugsweise um einen von der Venturi- Düse erzeugten Venturi-Saugdruck bzw. Unterdruck handelt.

Dadurch, dass der Ist-Volumenstrom indirekt über die Druckfluktuation ermittelt wird, kann auch eine Abweichung von einem über einen anderen Sensor oder eine andere Methode erfassten Volumenstrom durch die Mischeinrichtung erkannt und dadurch auch ein Fehler bzw. ein Sensorfehler erkannt werden.

Zusätzlich oder optional kann gemäß einer ebenfalls vorteilhaften Ausgestaltung des Verfahrens vorgesehen sein, dass die Auswerteelektronik eine Frequenz einer von dem Sensor erfassten Druckfluktuation in Abhängigkeit eines Massenstroms oder alternativ eines Volumenstroms durch das Regelventil erfasst und auswertet. Die Auswerteelektronik erkennt dabei bei einer linearen Veränderung der Frequenz bei zugleich linearerer Veränderung des Massen- oder gegebenenfalls Volumenstroms eine Fluktuation eines Brennstoffversorgungsdrucks als einen Fehler.

Der Brennstoffversorgungsdruck kann z.B. durch stromauf des Brennstoffeinlasses angeordnete Gaszähler schwanken. Diese (lastabhängige) Schwankung des Brennstoffversorgungsdrucks kann entsprechend erkannt und Filtereinstellungen bzw. Regelparameter des Regelventils angepasst werden.

Weiter kann die Auswerteelektronik die Druckfluktuationen durch die Frequenzen des Differenzdruckverlaufs erfassen mit einem Heizleistungsverlauf der Gastherme vergleichen und bei von der Heizleistung der Gastherme unabhängigen Druckfluktuationen eine durch Windstöße verursachte Fluktuation eines Luftvolumenstroms erkennen, bei welcher es sich um einen Fehler handeln kann. Hierbei ist insbesondere vorgesehen, dass ein Verlauf der Druckfluktuationen über die Zeit mit einem Verlauf der Heizleistung über die Zeit verglichen wird. Schwankt der Druck unabhängig von dem Heizleistungsverlauf, handelt es sich mit hoher Wahrscheinlichkeit um eine Druckfluktuation, welche durch eine unregelmäßige Luftströmung und beispielsweise Windstöße verursacht wird. Entsprechend kann eine solche von der Heizleistung bzw. dem Heizleistungsverlauf unabhängige Druckfluktuation als Fehler erkannt werden, woraufhin beispielsweise eine Fehlermeldung ausgegeben oder gespeichert werden kann.

Windfluktuationen können zu Schwankungen im Venturidruck bzw. in dem von der Mischeinrichtung zum Ansaugen des Brennstoffs erzeugten Unterdruck führen und können daher mit dem Sensor gemessen werden. Durch eine spektrale Betrachtung der Druckfluktuationen kann entsprechend ein zu starker Wind bzw. zu starke und/oder zu häufige Windstöße erkannt werden. Darauf basierend können auch Gegenmaßnahmen eingeleitet werden. Hierbei kann es sich beispielsweise um eine Einschränkung der Modulation und/oder Anpassung von Filtereinstellungen sowie Regelparameter des Offsetdruckreglers handeln.

Gemäß einer weiteren Variante des Verfahrens kann vorgesehen sein, dass die Gastherme ferner einen Brenner aufweist, der ausgebildet ist, das Brennstoff-Luft-Gemisch zu verbrennen, sodass es bei einer Zündung des Brennstoff-Luft-Gemisches zu einem Druckstoß in dem Brennstoff-Luft-Gemisch kommen kann, welcher nach der Zündung durch den Sensor als Druckfluktuationen erfassbar ist. Verfahrensgemäß erfasst die Auswerteelektronik die Druckfluktuation und erfasst durch Analyse des durch die Druckfluktuationen bestimmten Differenzdruckverlaufs den auftretenden Druckstoß als einen Kennwert.

Werden die einen Brenner erfordernden Weiterbildungen kombiniert, handelt es sich vorzugsweise um einen einzelnen Brenner und nicht um mehrere Brenner.

Soweit Fehler, Kennwerte und Toleranzwerte beschrieben sind, kann es sich jeweils um unterschiedliche Fehler und Werte handeln, sodass mittels des Verfahrens mehrere Kennwerte ermittelbar, jeweilige Toleranzwerte berücksichtigen mit den jeweiligen Sollwerten vergleichbar und daraus jeweilige Fehler bestimmbar sind.

Ein weiterer Aspekt der Erfindung betrifft eine Gastherme, welche ausgebildet ist, ein erfindungsgemäßes Verfahren durchzuführen.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

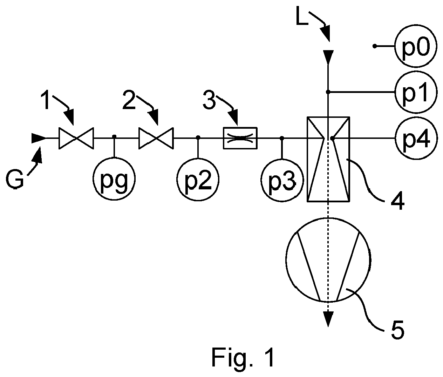

- Fig. 1: eine beispielhafte schematische Darstellung einer Gastherme.

Figur 1 zeigt schematisch einen Teil bzw. einen Ausschnitt einer Gastherme, wobei ein Venturi-Mischer als Mischeinrichtung 4 dargestellt ist, in welchen von einem Gebläse 5 Luft durch einen Lufteinlass L aus der Umgebung mit einem Luftdruck p0 gesaugt wird. In der Mischeinrichtung 4 wird die einströmende Luft und ein durch die Brennstoffzufuhr G einströmender Brennstoff (Gas) zu einem Brennstoff-Luft-Gemisch vermischt.

Der von der Brennstoffzufuhr G einströmende Brennstoff, bei welchem es sich insbesondere um ein Gas handelt, durchströmt dabei ein Sicherheitsventil 1, ein Regelventil 2 sowie die Hauptmengendrossel 3. Das Sicherheitsventil 1 weist vorzugsweise eine Durchlass- und eine Sperrstellung auf, in welcher der Durchfluss des Brennstoffs durch das Sicherheitsventil 1 gesperrt ist. Das Regelventil 2 ist zur Regelung des Volumenstroms des Brennstoffs ausgebildet, sodass der Volumenstrom des Brennstoffs durch das Regelventil 2 zu der Mischeinrichtung 4 einstellbar ist. Durch die Einstellung bzw. Regelung des Volumenstroms des Brennstoffs durch das Regelventil 2 ist somit das Mischungsverhältnis des Brennstoff-Luft-Gemisches einstellbar.

Weiter ist zumindest ein Differenzdrucksensor vorgesehen, welcher ausgebildet ist, den Differenzdruck zwischen dem Druck p2 des Brennstoffs stromauf der Hauptmengendrossel 3 und stromab des Regelventils 2 sowie einem Referenzdruck zu bestimmen, wobei es sich bei dem Referenzdruck vorzugsweise um den Umgebungsdruck p0 oder einen Druck p1 der Luft in einer Luft führenden Zuleitung zu der Mischeinrichtung 4 handelt. Hierfür kann der Differenzdrucksensor beispielsweise einen jeweiligen Drucksensor oder Druckaufnehmer zur Erfassung eines jeweiligen Drucks p0, p1, p2 aufweisen. Ferner können weitere Drucksensoren zur Erfassung der weiteren Drücke pg, p3 und p4 vorgesehen sein, welche als Referenzdrucksensoren zur Erfassung eines Referenzdrucks oder zur Plausibilisierung der Drücke p0, p1, p2 dienen können.

Das Brennstoff-Luft-Gemisch wird von dem Gebläse 5 zu einem nicht dargestellten Brenner der Gastherme gefördert, wo das Brennstoff-Luft-Gemisch verbrannt wird.

Durch das erfindungsgemäße Verfahren lassen sich beispielsweise die folgenden Funktionalitäten unabhängig voneinander oder in Kombination miteinander umsetzen:
1. Erfassen einer Thermoakustik
2. Erfassen bzw. Plausibilisieren einer Drehzahl eines Laufrades des Gebläses
3. Erfassen eines Volumenstroms der Luft durch die Mischeinrichtung bei keinem in die Mischeinrichtung strömenden Brennstoff (Spülen der Gastherme mit Luft)
4. Erkennung eines schwankenden Brennstoffversorgungsdrucks
5. Erkennung von Windfluktuationen

Dabei kann wie zuvor beschrieben jeweils ein Kennwert erfasst und mit einem Soll- oder Grenzwert verglichen werden, wobei jeweils ein Toleranzwert berücksichtigt werden kann. Abhängig von dem Vergleich bzw. wenn der Kennwert als Ist-Wert zu stark vom Soll-Wert abweicht oder den Grenzwert über- oder unterschreitet kann dann ein Fehler erkannt bzw. auf einen Fehler geschlossen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Auswertung einer von einem Sensor erfassbaren instationären Druckdifferenz an einer Gastherme, wobei der Sensor ein Differenzdrucksensor oder ein Massenstromsensor ist, wobei die Gastherme eine Mischeinrichtung (4) zum Mischen eines von einem Brennstoffeinlass (G) zuströmenden Brennstoffs und einer von einem Lufteinlass (L) zuströmenden Luft zu einem Brennstoff-Luft-Gemisch, ein Gebläse (5) zum Ansaugen des Brennstoffs und der Luft durch die Mischeinrichtung (4), eine Hauptmengendrossel (3) zur Begrenzung eines Massenstroms des Brennstoffs in die Mischeinrichtung (4), ein stromauf der Hauptmengendrossel (3) angeordnetes Regelventil (2) zur Regelung eines Massenstroms des Brennstoffs in die Mischeinrichtung (4) sowie ein stromauf des Regelventils (2) angeordnetes Sicherheitsventil (1) zur Unterbrechung des Massenstroms des Brennstoffs aufweist, **dadurch gekennzeichnet, dass**
der Sensor einen Differenzdruck zwischen einem Druck (p2) an einem Messpunkt stromauf der Hauptmengendrossel (3) und stromab des Regelventils (2) und einem Referenzdruck (p0, p1) an einem Referenzmesspunkt erfasst und an eine Auswerteelektronik übermittelt,
wobei eine Heizleistung der Gastherme gemäß einem vorbestimmten Heizleistungsverlauf variiert und/oder auf einen vorbestimmten Wert eingestellt wird,
wobei der Sensor während der Variation der Heizleistung und/oder bei der auf den vorbestimmten Wert eingestellten Heizleistung einen Differenzdruckverlauf erfasst und an die Auswerteelektronik übermittelt,
wobei die Auswerteelektronik den Differenzdruckverlauf über seinen Zeitbereich und/oder seinen Frequenzbereich auswertet und zumindest ein den Differenzdruckverlauf charakterisierender Kennwert ermittelt und mit einem vorbestimmten Vergleichswert verglichen wird, wobei bei einer über einen vorbestimmten Toleranzwert hinausgehenden Abweichung des Kennwerts von dem Vergleichswert ein Fehler der Gastherme erkannt wird.

2. Verfahren nach Anspruch 1,
wobei die Gastherme ferner einen Brenner aufweist, der ausgebildet ist, das Brennstoff-Luft-Gemisch zu verbrennen, sodass es durch die Verbrennung zu einer Thermoakustik in dem Brennstoff-Luft-Gemisch kommen kann, welche während der Verbrennung durch den Sensor als Druckfluktuationen erfassbar ist,
wobei die Auswerteelektronik die Druckfluktuation erfasst und durch Analyse des Differenzdruckverlaufs die auftretende Thermoakustik als einen Kennwert erkennt.

3. Verfahren nach dem vorhergehenden Anspruch,
wobei die Auswertelektronik die Thermoakustik mit einem vorbestimmten Grenzwert für die Thermoakustik als Vergleichswert vergleicht und bei einem Überschreiten des Grenzwerts den Brenner und/oder das Gebläse (5) und/oder das Regelventil (2) und/oder ein Sicherheitsventil (1) die Thermoakustik absenkend und insbesondere unterhalb des Grenzwerts absenkend ansteuert.

4. Verfahren nach einem der vorhergehenden Ansprüche,
wobei das Gebläse (5) ein Laufrad aufweist und das Laufrad durch seine Rotation Druckfluktuationen des Brennstoff-Luft-Gemisches erzeugt, welche von dem Sensor erfassbar sind,
wobei von der Auswerteelektronik die Druckfluktuationen durch die Frequenzen des Differenzdruckverlaufs erfasst und aus den Frequenzen des Differenzdruckverlaufs eine Ist-Drehzahl des Laufrades als einen Kennwert bestimmt.

5. Verfahren nach dem vorhergehenden Anspruch,
wobei das Gebläse (5) einen das Laufrad mit einer Motordrehzahl antreibenden Motor aufweist und die Motordrehzahl einer Soll-Drehzahl des Laufrades entspricht,
wobei die Auswerteelektronik die Ist-Drehzahl des Laufrades als Kennwert mit der Soll-Drehzahl des Laufrades als Vergleichswert vergleicht,
wobei bei einer Abweichung der Ist-Drehzahl von der Soll-Drehzahl des Laufrades über einen vorbestimmten Toleranzwert hinaus durch die Auswerteelektronik erkannt wird, dass das Laufrad nicht in vorbestimmter Weise mit dem Motor verbunden ist.

6. Verfahren nach einem der vorhergehenden Ansprüche,
wobei der Differenzdruckverlauf bei geschlossenem Sicherheitsventil (1) erfasst wird, sodass es in der Mischeinrichtung (4) zu Strömungsablösungen der von dem Lufteinlass (L) einströmenden Luft kommt, welche zu von dem Drucksensor erfassbaren Druckfluktuationen führen,
wobei die Auswerteelektronik den Differenzdruckverlauf erfasst und aus den Frequenzen des Differenzdruckverlaufs einen Ist-Volumenstrom der Luft durch die Mischeinrichtung (4) als einen Kennwert bestimmt.

7. Verfahren nach dem vorhergehenden Anspruch,
wobei die Auswerteelektronik aus dem von dem Sensor ermittelten Differenzdruck einen Soll-Volumenstrom bestimmt.

8. Verfahren nach dem vorhergehenden Anspruch,
wobei die Auswerteelektronik den Ist-Volumenstrom und den Soll-Volumenstrom miteinander vergleicht und bei einer Abweichung über einen Toleranzwert einen Fehler erkennt.

9. Verfahren nach einem der vorhergehenden Ansprüche,
wobei die Auswerteelektronik eine Frequenz einer von dem Sensor erfassten Druckfluktuation in Abhängigkeit eines Massenstroms durch das Regelventil (2) erfasst und auswertet,
wobei die Auswerteelektronik bei einer linearen Veränderung der Frequenz bei zugleich linearerer Veränderung des Massenstroms eine Fluktuation eines Brennstoffversorgungsdrucks (pg) als einen Fehler erkennt.

10. Verfahren nach einem der vorhergehenden Ansprüche,
wobei die Auswerteelektronik die Druckfluktuationen durch die Frequenzen des Differenzdruckverlauf erfasst, mit dem Heizleistungsverlauf der Gastherme vergleicht und bei von der Heizleistung der Gastherme unabhängigen Druckfluktuationen eine durch Windstöße verursachte Fluktuation eines Luftvolumenstroms (p1) erkennt, bei welcher es sich um einen Fehler handeln kann.

11. Verfahren nach einem der vorhergehenden Ansprüche,
wobei die Gastherme ferner einen Brenner aufweist, der ausgebildet ist, das Brennstoff-Luft-Gemisch zu verbrennen, sodass es bei einer Zündung des Brennstoff-Luft-Gemisches zu einem Druckstoß in dem Brennstoff-Luft-Gemisch kommen kann, welcher nach der Zündung durch den Sensor als Druckfluktuationen erfassbar ist,
wobei die Auswerteelektronik die Druckfluktuation erfasst und durch Analyse des durch die Druckfluktuationen bestimmten Differenzdruckverlaufs den auftretenden Druckstoß als einen Kennwert erfasst.

12. Gastherme, welche ausgebildet ist, ein Verfahren gemäß einem der vorhergehenden Ansprüche durchzuführen.
